# FASCICULE DE BREVET EUROPEEN

(11) **EP 2 045 171 B1**
(45) Date de publication et mention de la délivrance du brevet: **20.06.2012**
(21) Numéro de dépôt: 08305615.0
(22) Date de dépôt: 30.09.2008
(51) Int. Cl.: B62D 25/08

(54) **Module avant de véhicule automobile et procédé de montage associé**
Frontmodul für Kraftfahrzeuge und Montageverfahren dafür
Front module for motor vehicles and related assembling method

(30) Priorité: 04.10.2007 FR 0758063
(43) Date de publication de la demande: 08.04.2009
(73) Titulaire: Renault S.A.S., 92100 Boulogne-Billancourt (FR)
(72) Inventeur: Bignon, Yannick, 92290, CHATENAY MALABRY (FR)

(56) Documents cités:
- WO-A-2006/100379
- WO-A-2006/117477
- JP-A- 2007 216 706

## Description

L'invention concerne un agencement pour le montage, dans un véhicule automobile, d'une pièce de liaison entre une traverse extrême avant et une poutre transversale d'une face avant technique.

JP 2007 216 706 découle une pièce de liaison conformément au préambule de la revendication 1.

Un véhicule automobile présente généralement un module avant comportant une traverse extrême avant au dessus de laquelle se trouve une face avant technique, qui permet de supporter des éléments tels que des projecteurs, un radiateur, des câblages électriques, par exemple. Elle est surmontée par un bord avant d'un capot et reçoit ainsi en appui sur sa partie supérieure des butées de surcourse du capot. Mais les efforts appliqués par les butées de surcourse sur la face avant technique pouvant être importants, une reprise d'effort par un élément de structure tel que la traverse extrême avant du véhicule est nécessaire.

Cependant, le montage d'une pièce entre la face avant technique et la traverse extrême avant permettant cette reprise d'effort doit tenir compte des contraintes géométriques du module avant du véhicule. En effet, la mise en géométrie de la partie extrême avant du module avant du véhicule ne peut généralement pas être assurée par la traverse extrême avant qui présente une dispersion selon une direction longitudinale du véhicule, la mise en géométrie de la traverse extrême avant à ce stade du procédé de montage, n'étant pas possible en raison du coût important des moyens de mise en géométrie devant être alors utilisés. La face avant technique est donc la seule pièce pouvant garantir la bonne géométrie de pièces du module avant du véhicule telles que le bouclier, les projecteurs ou des butées de surcourse. Il ne faut donc pas que le montage de la pièce de reprise d'effort perturbe la mise en géométrie des pièces du module avant.

Afin de pallier ces inconvénients, l'invention a pour objet un module avant comportant une pièce de reprise d'efforts dont le montage est sans effet sur la mise en géométrie des autres pièces du module avant.

L'invention a aussi pour objet une pièce de reprise d'efforts comportant un moyen de prémaintien.

A cet effet, l'invention propose un module avant du type cité ci-dessus, caractérisé en ce que la pièce de liaison est apte à occuper une configuration de prémontage dans laquelle la pièce est maintenue sur la poutre de la face avant technique et une configuration de montage dans laquelle la pièce est fixée sur la traverse extrême avant, un degré de liberté de la pièce par rapport à la face avant technique étant prévu de manière que le déplacement de la pièce par rapport à la face avant technique durant le passage de la configuration de prémontage à la configuration de montage soit apte à compenser un éventuel positionnement incorrect de la traverse extrême avant par rapport à la face avant technique.

Selon d'autres caractéristiques de l'invention:
- La pièce de liaison est une équerre présentant une paroi verticale destinée à être fixée par vissage sur une cloison arrière de la traverse extrême avant et une paroi horizontale, reliée à un bord supérieur de la paroi verticale, destinée à être fixée sur une face supérieure de la poutre inférieure de la face avant technique.
- La pièce comporte un moyen de maintien en position de prémontage.
- Le moyen de maintien en position de prémontage est une patte s'étendant longitudinalement vers l'arrière et coopérant avec un rebord d'une ouverture ménagée dans la face supérieure de la poutre de la face avant technique.
- La patte de maintien est apte à se déplacer à l'intérieur de l'ouverture de manière à autoriser un mouvement longitudinal vers l'avant de l'équerre lors de la fixation de la pièce sur la traverse extrême avant.
- Une extrémité de la patte de maintien comporte des ailettes latérales aptes à coopérer avec des bords latéraux de l'ouverture ménagée dans la poutre inférieure de la face avant technique, de manière à empêcher le démontage intempestif de l'équerre en position de prémontage et de manière à empêcher le pivotement de l'équerre lors de la fixation par vissage de ladite équerre sur la cloison arrière de la traverse extrême avant.
- Une butée est disposée au voisinage d'une extrémité avant de l'ouverture, de manière à limiter le déplacement de l'équerre vers l'avant.

D'autres caractéristiques et avantages de l'invention apparaîtront à la lecture de la description d'exemples de réalisation d'un module avant de véhicule automobile en référence aux dessins annexés dans lesquels :
- La figure 1 est une vue générale en perspective d'un module avant de véhicule automobile comportant une pièce de liaison.
- La figure 2 est une vue en perspective de dessus de l'agencement de la pièce de liaison sur le module avant.
- La figure 3, est une vue en perspective de la pièce de liaison seule.
- La figure 4 est une vue de dessous de l'agencement de la pièce de liaison sur le module avant.

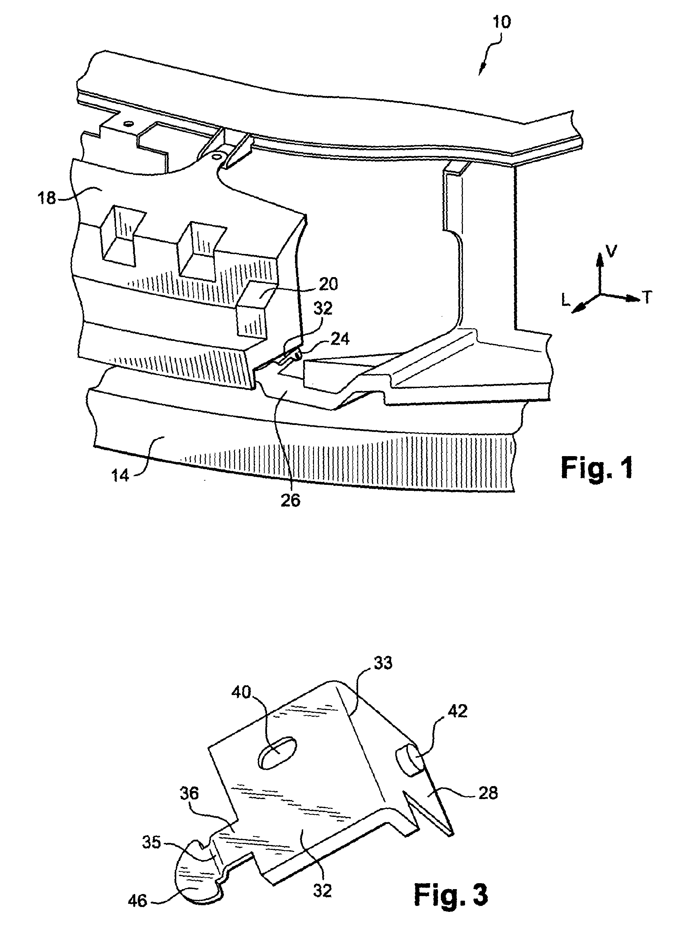

Dans la description qui suit, nous prendrons à titre non limitatif une orientation longitudinale, verticale et transversale indiquée par le trièdre L, V, T des figures 1 à 4.

Des éléments identiques ou analogues sont désignés par les mêmes chiffres de référence. La face avant technique est donc la seule pièce dans cette zone permettant d'assurer une bonne géométrie.

Tel que représenté à la figure 1, un module avant 10 comporte un capot 12 et une traverse extrême avant 14, reliée à des éléments de structure du véhicule (non représentés). Entre un bord avant 16 du capot 12 et la traverse avant 14 se trouve une face avant technique 18. La face avant technique 18 est destinée à supporter des éléments du véhicule (non représentés) tel qu'un radiateur, des projecteurs, des câblages électriques, par exemple. Une partie supérieure 20 de la face avant technique 18 reçoit en appui des butées de surcourse 22 du capot 10.

Les butées de surcourse 22 peuvent exercer un effort important sur la partie supérieure 20 de la face avant technique 18. Pour cette raison, une reprise d'effort par un élément de structure du véhicule est nécessaire. Ainsi, une pièce de liaison 24 est prévue entre la face avant technique 18 et la traverse avant 14.

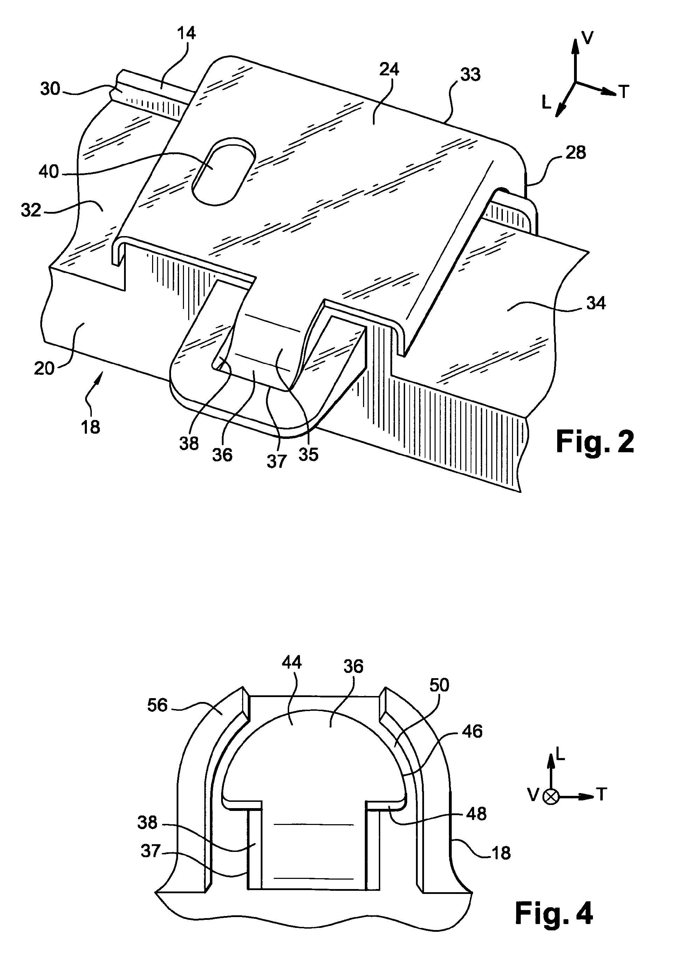

Tel que représenté à la figure 2, la pièce de liaison 24 est une équerre reliant une poutre transversale inférieure 26 de la face avant technique 18 à la traverse extrême avant 14. L'équerre 24 comporte une paroi verticale 28 coopérant avec une cloison arrière 30 de la traverse extrême avant 14 et une paroi horizontale 32, reliée à un bord supérieur 33 de la paroi verticale 30, coopérant avec une face supérieure 34 de la poutre transversale 26 de la face avant technique 18.

La paroi horizontale 32 comporte une patte 36 dirigée vers l'avant du véhicule et comportant un épaulement transversal 35. La patte 36 coopère avec un rebord 37 d'une ouverture 38 ménagée dans la face supérieure 34 de la poutre transversale 26 de la face avant technique 18. Il est aussi prévu un moyen de fixation de l'équerre 24 sur la face avant technique 18. Ainsi la paroi horizontale 34 de l'équerre 24 comporte un orifice oblong 40 destiné à recevoir par exemple une vis de fixation (non représentée).

Tel que représenté à la figure 3, il est aussi prévu des moyens de fixation de l'équerre 24 sur la traverse avant 14. Ainsi la paroi verticale 28 présente un orifice 42 destiné à recevoir une vis de fixation (non représentée). L'orifice 42 peut être taraudé.

Tel que représenté à la figure 4, une extrémité libre 44 de la patte 36 comporte des ailes latérales 46, qui coopèrent avec le rebord 37 de l'ouverture 38. Un bord arrière 48 des ailes latérales 46 s'étend selon une direction sensiblement transversale, tandis qu'un bord avant 50 des ailes 46 s'étend selon une direction oblique. Ainsi, les ailes latérales 46 présentent une portion avant 52 plus étroite que leur portion arrière 54. La largeur de la patte 36 augmentée de la largeur des ailes latérales 46 prise au niveau de leur portion arrière 54 est supérieure à la largeur de l'ouverture 38.

Le rebord 37 de l'ouverture 38 comporte, de part et d'autre et à distance de ladite ouverture 38, une butée 56 située en regard de chaque aile latérale 46. La butée 56, dans le cas décrit ici, présente une orientation sensiblement parallèle à l'orientation du bord avant 50 de chaque aile latérale 46.

Ainsi, le montage de l'équerre 24 par un opérateur comporte plusieurs étapes.

Lors d'une première étape, l'opérateur insère de haut en bas la patte 36 à l'intérieur de l'ouverture 38. L'insertion de la patte 36 à l'intérieur de l'ouverture 38 est effectuée de biais, de façon à pouvoir faire passer les ailes latérales 46. A la fin de la première étape, l'équerre 24 se trouve dans une position de prémontage, dans laquelle ladite équerre est maintenue par l'intermédiaire de la patte de maintien 36 dont les ailes 46 coopèrent avec le bord 37 de l'ouverture 38. L'opérateur n'a alors pas besoin de tenir l'équerre 24 avec les mains. Même si l'équerre 24 glisse vers l'arrière, l'équerre 24 ne peut pas tomber car elle est retenue dans l'ouverture 38 par les ailes latérales 46.

De plus, lorsque l'opérateur, en vue d'une deuxième étape du montage, insère une vis de fixation dans l'orifice 42 ménagé dans la paroi verticale 28 de l'équerre 24, le déplacement vers l'avant de l'équerre 24 est limité par les butées 56 coopérant avec les bords avant 50 des ailes latérales 46 de manière à éviter un basculement de ladite équerre 24.

Lors de la deuxième étape, l'opérateur procède à la fixation de l'équerre 24 sur la traverse avant 14. Pendant l'opération de vissage, l'équerre 24 peut glisser longitudinalement de l'arrière vers l'avant grâce à la patte 36 qui se déplace dans l'ouverture 38, ce qui permet de rattraper un éventuel mauvais positionnement longitudinal de la traverse avant 14 par rapport à la face avant technique 18. Les ailes 46 de la patte 36 permettent également à l'équerre 24 de rester plaquée, selon la direction verticale, contre la face avant technique 18, l'opération de vissage ayant tendance à faire tourner l'équerre 24 dans le même sens que celui du vissage.

Enfin, lors d'une troisième étape, l'opérateur procède au vissage de la paroi horizontale 26 de l'équerre 24 sur la face avant technique 18.

Ainsi, il est possible d'assurer une reprise d'effort sur des éléments à bonne géométrie en partie extrême avant du véhicule.

Enfin, il est de plus possible de monter la traverse extrême avant très tôt, sans avoir besoin d'utiliser des moyens de mise en géométrie d'habitude très onéreux à ce stade.

## Revendications

1. Agencement pour le montage, dans un véhicule automobile, d'une pièce de liaison (24) entre une traverse extrême avant (14) et une poutre transversale (26) inférieure d'une face avant technique (18), la pièce de liaison (24) étant apte à occuper une configuration de prémontage dans laquelle la pièce de liaison (24) est maintenue sur la poutre transversale (26) de la face avant technique (18) et une configuration de montage dans laquelle la pièce de liaison (24) est fixée sur la traverse extrême avant (14), **caractérisé en ce que** la pièce de liaison (24) comporte une paroi verticale (28) coopérant avec la traverse extrême avant (14) et une paroi horizontale (32) coopérant avec la poutre transversale (26), la paroi horizontale (32) comportant une patte de maintien (36) pourvue de moyens de retenue (46) coopérant avec le rebord (37) d'une ouverture (38) ménagée sur la poutre transversale (26), les moyens de retenue (46) et le rebord (37) étant conformés de façon à permettre, lors du passage de la configuration de prémontage à la configuration de montage, un déplacement longitudinal de la pièce de liaison (24) par rapport à la poutre transversale (26) tout en retenant la patte de maintien (36) dans l'ouverture (38) par les moyens de retenue (46), l'agencement comprenant en outre des moyens de fixation respectifs entre d'une part la paroi verticale (28) et la traverse extrême avant (14) et d'autre part la paroi horizontale (32) et la poutre transversale (26) et horizontale (32).

2. Agencement pour le montage d'une pièce de liaison (24) selon la revendication 1, **caractérisé en ce que** la pièce de liaison (24) est une équerre dont la paroi verticale (28) est destinée à être fixée par vissage sur une cloison arrière (30) de la traverse extrême avant (14) et la paroi horizontale (32), qui est reliée à un bord supérieur (33) de la paroi verticale (28), est destinée à être fixée sur une face supérieure (34) de la poutre transversale (26) de la face avant technique (18).

3. Agencement pour le montage d'une pièce de liaison (24) selon la revendication 2, **caractérisé en ce que** la patte de maintien (36) s'étend longitudinalement et coopère avec le rebord (37) de l'ouverture (38) ménagée dans la face supérieure (34) de la poutre transversale (26) de la face avant technique (18).

4. Agencement pour le montage d'une pièce de liaison (24) selon la revendication 2 ou 3, **caractérisé en ce que** les moyens de retenue (46) sont constitués d'ailettes latérales prévues sur une extrémité (44) de la patte de maintien (36), les ailettes étant aptes à coopérer avec des bords latéraux de l'ouverture (38) ménagée dans la poutre transversale (26) de la face avant technique (18), de manière à empêcher le démontage intempestif de l'équerre (24) en position de prémontage et de manière à empêcher le pivotement de l'équerre (24) lors de la fixation par vissage de ladite équerre (24) sur la cloison arrière (30) de la traverse extrême avant (14).

5. Agencement pour le montage d'une pièce de liaison (24) selon la revendication 3 ou 4, **caractérisé en ce qu'**une butée (56) est disposée au voisinage d'une extrémité avant de l'ouverture (38), de manière à limiter le déplacement de l'équerre (24) vers l'avant.

## Claims

1. Arrangement for mounting, in a motor vehicle, a link piece (24) between an extreme front cross member (14) and a lower transversal beam (26) of a front-end module (18), the link piece (24) being capable of assuming a pre-mounting configuration in which the link piece (24) is held on the transversal beam (26) of the front-end module (18) and a mounting configuration in which the link piece (24) is fastened to the extreme front cross member (14), **characterized in that** the link piece (24) has a vertical wall (28) cooperating with the extreme front cross member (14) and a horizontal wall (32) cooperating with the transversal beam (26), the horizontal wall (32) having a holding tab (36) provided with retaining means (46) cooperating with the flange (37) of an opening (38) formed on the transversal beam (26), the retaining means (46) and the flange (37) being shaped so as to allow, on the transition from the premounting configuration to the mounting configuration, a longitudinal displacement of the link piece (24) relative to the transversal beam (26) while retaining the holding tab (36) in the opening (38) by the retaining means (46), the arrangement also comprising respective fastening means between, on the one hand, the vertical wall (28) and the extreme front cross member (14) and, on the other hand, the horizontal wall (32) and the transversal beam (26).

2. Arrangement for mounting a link piece (24) according to Claim 1, **characterized in that** the link piece (24) is a bracket whose vertical wall (28) is intended to be screw-fastened onto a rear partition (30) of the extreme front cross member (14) and the horizontal wall (32), which is linked to a top edge (33) of the vertical wall (28), is intended to be fastened onto a top face (34) of the transversal beam (26) of the front-end module (18).

3. Arrangement for mounting a link piece (24) according to Claim 2, **characterized in that** the holding tab (36) extends longitudinally and cooperates with the flange (37) of the opening (38) formed in the top face (34) of the transversal beam (26) of the front-end module (18).

4. Arrangement for mounting a link piece (24) according to Claim 2 or 3, **characterized in that** the retaining means (46) consist of lateral fins provided on one end (44) of the holding tab (36), the fins being able to cooperate with lateral edges of the opening (38) formed in the transversal beam (26) of the front-end module (18), so as to prevent the unwanted dismantling of the bracket (24) in the premounting position and so as to prevent the pivoting of the bracket (24) when screw-fastening said bracket (24) onto the rear partition (30) of the extreme front cross member (14).

5. Arrangement for mounting a link piece (24) according to Claim 3 or 4, **characterized in that** an abutment (56) is arranged in the vicinity of a front end of the opening (38) , so as to limit the forward displacement of the bracket (24).

## Patentansprüche

1. Anordnung zum Einbau, in ein Kraftfahrzeug, eines Verbindungsbauteils (24) zwischen einem vorderen Endquerträger (14) und einem unteren Querbalken (26) eines Frontendmoduls (18), wobei das Verbindungsbauteil (24) eine Voreinbaukonfiguration, in der das Verbindungsbauteil (24) am Querbalken (26) des Frontendmoduls (18) gehalten wird, und eine Einbaukonfiguration annehmen kann, in der das Verbindungsbauteil (24) am vorderen Endquerträger (14) befestigt wird, **dadurch gekennzeichnet, dass** das Verbindungsbauteil (24) eine senkrechte Wand (28), die mit dem vorderen Endquerträger (14) zusammenwirkt, und eine waagrechte Wand (32) aufweist, die mit dem Querbalken (26) zusammenwirkt, wobei die waagrechte Wand (32) eine Haltelasche (36) aufweist, die mit Rückhalteeinrichtungen (46) versehen ist, welche mit der Randleiste (37) einer auf dem Querbalken (26) ausgebildeten Öffnung (38) zusammenwirken, wobei die Rückhalteeinrichtungen (46) und die Randleiste (37) so gestaltet sind, dass sie beim Übergang von der Voreinbaukonfiguration in die Einbaukonfiguration eine Längsverschiebung des Verbindungsbauteils (24) bezüglich des Querbalkens (26) erlauben und dabei die Haltelasche (36) durch die Rückhalteeinrichtungen (46) in der Öffnung ( 38 ) halten, wobei die Anordnung außerdem Befestigungseinrichtungen zwischen einerseits der senkrechten Wand (28) und dem vorderen Endquerträger (14) bzw. andererseits der waagrechten Wand (32) und dem Querbalken (26) enthält.

2. Anordnung zum Einbau eines Verbindungsbauteils (24) nach Anspruch 1, **dadurch gekennzeichnet, dass** das Verbindungsbauteil (24) ein Winkelträger ist, dessen senkrechte Wand (28) dazu bestimmt ist, durch Schraubverbindung an einer hinteren Trennwand (30) des vorderen Endquerträgers (14) befestigt zu werden, und die mit einem oberen Rand (33) der senkrechten Wand (28) verbundene waagrechte Wand (32) dazu bestimmt ist, an einer Oberseite (34) des Querbalkens (26) des Frontendmoduls (18) befestigt zu werden.

3. Anordnung zum Einbau eines Verbindungsbauteils (24) nach Anspruch 2, **dadurch gekennzeichnet, dass** die Haltelasche (36) sich in Längsrichtung erstreckt und mit der Randleiste (37) der in der Oberseite (34) des Querbalkens (26) des Frontendmoduls (18) ausgebildeten Öffnung (38) zusammenwirkt.

4. Anordnung zum Einbau eines Verbindungsbauteils (24) nach Anspruch 2 oder 3, **dadurch gekennzeichnet, dass** die Rückhalteeinrichtungen (46) aus seitlichen Flügeln bestehen, die an einem Ende (44) der Haltelasche (36) vorgesehen sind, wobei die Flügel in der Lage sind, mit Seitenrändern der im Querbalken (26) des Frontendmoduls (18) ausgebildeten Öffnung (38) zusammenzuwirken, um den unerwünschten Ausbau des Winkelträgers (24) in der Voreinbaustellung zu verhindern, und um das Schwenken des Winkelträgers (24) bei der Schraubbefestigung des Winkelträgers (24) an der hinteren Trennwand (30) des vorderen Endquerträgers (14) zu verhindern.

5. Anordnung zum Einbau eines Verbindungsbauteils (24) nach Anspruch 3 oder 4, **dadurch gekennzeichnet, dass** ein Anschlag (56) in der Nähe eines vorderen Endes der Öffnung (38) angeordnet ist, um die Verschiebung des Winkelträgers (24) nach vorne zu begrenzen.
